# EUROPÄISCHE PATENTSCHRIFT

(11) **EP 0 582 604 B1**
(45) Veröffentlichungstag und Bekanntmachung des Hinweises auf die Patenterteilung: **23.08.1995**
(21) Anmeldenummer: 92909118.9
(22) Anmeldetag: 21.04.1992
(51) Int. Cl.: C09K 21/02, B32B 21/12

(54) **SCHWERENTFLAMMBARE FLACHPRESSPLATTE UND VERFAHREN ZU IHRER HERSTELLUNG**
FIRE-RETARDANT FLAT-PRESSED PANEL AND PROCESS FOR PRODUCING IT
PANNEAU DE PARTICULES PRESSE A PLAT DIFFICILEMENT INFLAMMABLE ET PROCEDE POUR SA FABRICATION

(30) Priorität: 30.04.1991 DE 4114068
(43) Veröffentlichungstag der Anmeldung: 16.02.1994
(73) Patentinhaber: Henkel Kommanditgesellschaft auf Aktien, 40191 Düsseldorf (DE)
(72) Erfinder: GRAF, Robert, D-7919 Altenstadt-Filzingen (DE); KAISER, Maria-Elisabeth, D-7900 Ulm (DE); ANNEMAIER, Dieter, D-7901 Illerkirchberg 2 (DE)
(86) Internationale Anmeldenummer: EP9200873
(87) Internationale Veröffentlichungsnummer: WO9219696

(56) Entgegenhaltungen:
- EP-A- 0 056 267
- CA-A- 1 096 104
- DE-A- 3 416 662
- US-A- 4 165 409

## Beschreibung

Die Erfindung betrifft eine schwerentflammbare Flachpreßplatte aus an sich brennbarem Plattenmaterial, Bindemittel, Flammschutzmittel und ggf. Hilfsstoffen.

Der Begriff Flachpreßplatte umschreibt eine Vielzahl plattenförmiger Werkstoffe, die insbesondere im Bauwesen für tragende, aussteifende, dekorative und andere Zwecke verwendet werden. Bei diesen Flachpreßplatten ist ein geeignetes Basismaterial mit einem oder mehreren Bindemitteln verpreßt. Je nach gewünschter Einsatzmöglichkeit ist es häufig erforderlich, daß die Platten ein bestimmtes Verhalten im Brandfall aufweisen. Zu diesem Zweck können die Flachpreßplatten Zusätze enthalten, die dafür sorgen, daß die Platten im Brandfall schwerer entzündet werden können. So sind beispielsweise im Bauwesen nur Baustoffe der Baustoffklassen B1 und B2 nach DIN 4102, Teil 1 zugelassen.

Häufig verwendete Flachpreßplatten sind die sog. Spanplatten, die durch Verpressen von Spänen aus Holz und/oder anderen holzartigen Faserstoffen mit Bindemitteln hergestellt sind. Besteht das Spanmaterial nur aus Holzspänen, spricht man von einer sog. Holzspanplatte. Bei den Spanplatten werden im wesentlichen zwei Normtypen unterschieden, die Bindemittel unterschiedlicher Art und Menge enthalten. V 20-Platten sind zur Verwendung in Räumen mit im allgemeinen niedriger Luftfeuchtigkeit vorgesehen. Als Bindemittel werden bei diesen Platten hauptsächlich Aminoplaste verwendet. Zur Verwendung in Räumen bei auch hohen Luftfeuchtigkeiten sind die sog. V 100-Platten vorgesehen, die normalerweise mit alkalisch härtenden Phenoplasten, Phenolresorcinharzen oder neuerdings mit Polyharnstoffen gebunden sind.

Eine gängige Methode zum Erreichen einer Brandschutzwirkung ist es, die Platten mit geeigneten Beschichtungen zu versehen. Als solche Brandschutzbeschichtungen sind die sog. Dämmschichtbildner bekannt, die im Brandfall auf dem betreffenden Untergrund einen Schaum ausbilden. Hierdurch soll die Ausbreitung des Brandes auf dem zu schützenden Untergrund verhindert werden. Diese Beschichtungen haben den Nachteil, daß bei der Herstellung der Flachpreßplatte zum Aufbringen der Beschichtung ein zusätzlicher Arbeitsgang nötig ist oder daß die Beschichtung nachträglich auf eine sich bereits im Einsatz befindende Platte aufgebracht werden muß. Außerdem sind Beschichtungen auf der Außenseite der Platten Witterungs- und sonstigen Einflüssen von außen in hohem Maße ausgesetzt. Wie bereits ausgeführt, sind auch Flachpreßplatten bekannt, die Flammschutzmittel enthalten. Dabei werden klassische Flammschutzmittel , wie beispielsweise Borsäure, Monoammoniumphosphat oder Diammoniumphosphat verwendet. Es wurden auch Holzspanplatten hergestellt, bei denen Holz, Zement, Wasser und andere Additive vermischt werden und die geformte Platte anschließend getrocknet wird. Alle diese Verfahren haben den Nachteil, daß relativ große Mengen an Zusätzen verwendet werden müssen, um eine schwerentflammbare Platte zu erhalten, die insbesondere die Anforderungen der DIN 4102, Teil 1 erfüllt. Die großen Mengen an Zusätzen bedingen einen stark reduzierten Anteil an Basismaterial, wie beispielsweise Holz, so daß der Anteil an Basismaterial nur noch 20 bis 40 Gew.%, bezogen auf das Gesamtgewicht der Platte, betragen kann. Deshalb können solche Flachpreßplatten die übrigen an sie gestellten Anforderungen, wie beispielsweise bzgl. Festigkeit, Beständigkeit gegen Luftfeuchtigkeit o.a. , nicht mehr erfüllen.

EP-A-0 056 267 beschreibt schwerentflammbare Kunststoffe Besonders schwer entflammbar sind Bauteile mit Polyurethan - Schaumkern und Feststoffstegen, die Ammoniumphosphat, -polyphosphat, Borax und/oder Melamin enthalten.

Die vorliegende Erfindung stellt sich daher die Aufgabe, Flachpreßplatten zur Verfügung zu stellen, die schon bei relativ geringen Mengen an Zusätzen schwer entflammbar, insbesondere nach DIN 4102, Teil 1, sind. Dabei sollen die übrigen Eigenschaften der Platte durch die Zusätze nicht nachteilig beeinflußt werden.

Gelöst wird diese Aufgabe durch eine Flachpreßplatte der obengenannten Art, bei der als Flammschutzmittel eine Kombination enthalten ist, aus
a) einer Substanz, die bei erhöhter Temperatur eine Säure, insbesondere eine anorganische Säure, freizusetzen vermag,
b) einer kohlenstoffhaltigen Substanz mit veresterbaren Hydroxylgruppen und
c) einer Substanz, die bei erhöhter Temperatur ein nichtbrennbares Gas freizusetzen vermag.

Dabei liegen die Ansprechtemperaturen der Substanzen nach a) und c) oberhalb der zur Herstellung der Flachpreßplatte erforderlichen Temperatur. Zusätzlich besitzt das Flammschutzmittel eine geringe Wasserlöslichkeit und es ist in feiner Verteilung in das Plattenmaterial eingemischt.

Die Schwerentflammbarkeit der erfindungsgemäßen Flachpreßplatte im Brandfall beruht darauf, daß die bei erhöhter Temperatur freigesetzte Säure und die unter b) genannte Substanz bei den im Brandfall gegebenen Bedingungen unter Esterbildung miteinander reagieren und anschließend verkohlen. Die unter c) beschriebene Substanz bewirkt durch die Freisetzung eines Gases die Bildung eines kohlenstoffhaltigen Schaums, so daß die drei Substanzen durch ihr Zusammenwirken im Brandfall die flammschützende Wirkung hervorrufen. Das in der Flachpreßplatte enthaltene Flammschutzmittel bildet im Brandfall einen feinzelligen, hochisolierenden Schaum, der die Ausbreitung des Brandes wirksam erschwert. Durch die Einmischung des Flammschutzmittels in feiner Verteilung wird eine homogene Brandschutzwirkung und eine gleichmäßige Schaumbildung unterstützt. Die Tatsache, daß das Flammschutzmittel eine niedrige Wasserlöslichkeit besitzt, trägt dazu bei, daß die Brandschutzwirkung auch bei hoher Feuchtigkeit in der Umgebung der Platte zuverlässig erreicht wird.

Durch die Erfindung wird erreicht, daß die Anteile an Basismaterial in der Flachpreßplatte großgehalten und damit die im übrigen an die Platte gestellten Anforderungen ohne Schwierigkeiten erreicht werden können. Die Oberfläche der Flachpreßplatte wird auch nicht verändert, wie es beispielsweise bei Beschichtungen der Fall ist.

Das Plattenmaterial kann in beliebiger Form in die erfindungsgemäße Platte eingebracht sein. Beispielsweise können faserige und/oder stückige Materialteile verwendet sein. Als Plattenmaterial können neben Holz und anderen holzartigen Faserstoffen textile Materialien, Cellulose oder Kunststoffe verwendet werden, wobei insbesondere Textilabfälle, Celluloseabfälle oder Kunststoffabfälle einsetzbar sind. Auch ein Einsatz von Viskose als Basismaterial ist möglich. Bevorzugt ist eine Platte, die unter Verwendung von holzartigen Stoffen, insbesondere von Holzspänen, hergestellt ist. Besonders bevorzugt nach der Erfindung ist eine Spanplatte aus Holz vom Typ V100, die die Anforderungen der Baustoffklasse B1 nach DIN 4102, Teil 1 erfüllt. Vorzugsweise wird die Bindung der Holzspäne durch Zusatz von Polyisocyanaten (Bildung von vernetzten Polyharnstoffen) erreicht. Dadurch wird eine schwerentflammbare Holzspanplatte erhalten, die zusätzlich formaldehydfrei und damit in hohem Maße umweltverträglich ist. Da die Preßtemperaturen bei Holzspanplatten üblicherweise zwischen 200 °C und 220 °C liegen, ist es zweckmäßig, die Substanzen nach a) und c) so zu wählen, daß die entsprechenden Ansprechtemperaturen oberhalb von 200 °C, insbesondere oberhalb 220 °C, liegen.

In Weiterbildung ist das Flammschutzmittel in der Flachpreßplatte vorzugsweise in einer Menge von 1 bis 50 Gew.% enthalten, wobei diese Menge auf das Gesamtgewicht der Platte bezogen ist. Bevorzugt sind Mengen von 3 bis 30 Gew.%, insbesondere von 5 bis 15 Gew.%, jeweils bezogen auf das Gesamtgewicht der Platte. Dies bedeutet, daß der Anteil an Plattenmaterial, insbesondere Holz, in jedem Fall mindestens 50 Gew.% oder vorzugsweise noch mehr beträgt, so daß die auf das Basismaterial zurückzuführenden Eigenschaften der Platte durch das Flammschutzmittel im wesentlichen unverändert bleiben.

Die Flachpreßplatte kann aus einer oder mehreren Schichten bestehen. Bevorzugt sind Platten, die eine ungerade Zahl an Schichten aufweisen, da sich Platten mit einer geraden Zahl von Schichten im Einsatz leichter verziehen können.

Nach der Erfindung weiter bevorzugt sind Flachpreßplatten, die aus zwei Deckschichten und mindestens einer Mittelschicht bestehen. Dabei kann die Deckschicht aus feinem Plattenmaterial, insbesondere feinen Holzspänen, bestehen, während in der Mittelschicht groberes Material mit Durchmessern von beispielsweise 1 cm verarbeitet ist. Die beiden Schichten können sich neben der Größe des verarbeiteten Materials auch in der mengenmäßigen Zusammensetzung unterscheiden. Vorzugsweise besitzen die beiden Deckschichten je ca. 20 % der Gesamtdicke der Platte, während die Mittelschichten insgesamt ca. 60 % der Gesamtdicke ausmachen. Es ist nach der Erfindung möglich, in verschiedenen Schichten der Platte verschiedene Mengen an Flammschutzmittel vorzusehen. Dies beinhaltet auch, daß bei einer Einschichtplatte die Konzentration des Flammschutzmittels über die Länge, Breite und Dicke der Platte variiert werden kann.

In Weiterbildung ist das Flammschutzmittel in den Deck-schichten in einer Menge von 5 bis 50 Gew.%, vorzugsweise von 15 bis 35 Gew.%, enthalten, wobei diese Mengen auf das Deckschichtmaterial bezogen sind. In der Mittelschicht ist das Flammschutzmittel in Mengen von 0 bis 50 Gew.%, insbesondere von 0 bis 20 Gew.%, enthalten, wobei sich diese Mengen auf das Material der Mittelschicht beziehen. Es ist weiter bevorzugt, wenn das Flammschutzmittel in den Deckschichten in höherer Konzentration vorliegt als in den Mittelschichten. Auf diese Weise wird durch das Flammschutzmittel bereits in den Deckschichten ein ausreichender Brandschutz erreicht und die Ausbreitung eines Brandes bereits an der Oberfläche der Platte wirksam erschwert. Nach einer bevorzugten Ausführungsform der Erfindung wird ein wirksamer Flammschutz bereits dann erreicht, wenn das Flammschutzmittel ausschließlich in den beiden Deckschichten enthalten ist. Dieses überraschende Ergebnis führt nicht nur zu einer Ersparnis an Material und Kosten, sondern erlaubt auch eine einfachere Herstellung der erfindungsgemäßen Flachpreßplatten. So kann beispielsweise eine Holzspanplatte vom Typ V100 der Baustoffklasse B1 nach DIN 4102, Teil 1 auf billige und einfache Weise zur Verfügung gestellt werden.

Als Bindemittel werden nach der Erfindung vorzugsweise solche eingesetzt, wie sie üblicherweise zum Abbinden des Plattenmaterials verwendet werden. Dies können thermoplastische oder duroplastische Bindemittel sein. Insbesondere werden duroplastische Bindemittel eingesetzt. Thermoplastische Bindemittel können den Nachteil haben, daß sie bei den zum Verpressen erforderlichen Temperaturen die Pressen verkleben können. Als vorteilhafte Bindemittel seien Phenoplaste und Phenolresorcinharz genannt. Bevorzugt als Bindemittel ist ein Isocyanat-Bindemittel, da die mit diesem Bindemittel hergestellten Platten, insbesondere Holzspanplatten, formaldehydfrei sind. Insbesondere kann das Bindemittel dem Plattenmaterial in einer Menge von 2 bis 15 Gew.%, vorzugsweise 3 bis 10 Gew.%, bezogen auf das Gewicht der Platte, zugesetzt sein.

Die Flachpreßplatten nach der Erfindung entfalten ihre flammhemmende Wirkung vorzugsweise bei Temperaturen oberhalb von 200 °C, insbesondere oberhalb von 220 °C. Es kann vorteilhaft sein, wenn diese Wirkung erst bei noch größeren Temperaturen, wie beispielsweise 250 °C, auftritt. Dies kann davon abhängig sein, bei welcher Temperatur die Verpressung von Plattenmaterial, Bindemittel, Flammschutzmittel und ggf. Hilfsstoffe zur Flachpreßplatte erfolgt. Bei der Preßtemperatur soll die Reaktion, die die flammhemmende Wirkung hervorruft, noch nicht erfolgen.

Bei den Hilfsstoffen nach der Erfindung handelt es sich um Hydrophobierungsmittel zur Verbesserung der Wasser-bzw. Feuchtigkeitsbeständigkeit der Platten, wie beispielsweise Paraffinemulsionen, um Leitfähigkeitsadditive zur Verhinderung bzw. Verringerung der statischen Aufladung der Platten oder um Konservierungsmittel und Farbstoffe.

Das in den erfindungsgemäßen Flachpreßplatten enthaltene Flammschutzmittel liegt in feiner Verteilung vor, wobei es vorzugsweise ein Pulver mit einer Partikelgröße von kleiner als 80 »m ist. Ein Pulver mit einer Partikelgröße von kleiner als 40 »m ist noch weiter bevorzugt. Flammschutzmittel mit den genannten feinen Verteilungen sind in besonderer Weise zur Herstellung schwerentflammbarer Flachpreßplatten geeignet.

Das in der Flachpreßplatte enthaltene Flammschutzmittel ist aus der Substanz nach a) in Mengen von 10 bis 60 Gew.%, vorzugsweise 30 bis 45 Gew.%, der Substanz nach b) von 10 bis 60 Gew.%, vorzugsweise 15 bis 50 Gew.% und der Substanz nach c) von 5 bis 55 Gew.%, vorzugsweise 20 bis 40 Gew.% zus ammengesetzt.

Die Substanz nach a) ist vorzugsweise eine solche, die Phosphorsäure und/oder Oligophosphorsäure und/oder Polyphosphorsäure freizusetzen vermag. Solche Substanzen sind insbesondere Ammoniumphosphate, wobei Monoammoniumphosphat und Ammoniumpolyphosphate oder Mischungen aus diesen Verbindungen verwendet werden können. Diese Substanzen können bevorzugt in kondensierter Form vorliegen. Auch Substanzen, die Schwefelsäure freisetzen können, sind nach der Erfindung einsetzbar. Substanzen, die eine organische Säure, wie beispielsweise Sulfonsäure freizusetzen vermögen, kommen ebenfalls in Frage.

Die kohlenstoffhaltigen Substanzen nach b) mit veresterbaren Hydroxylgruppen sind insbesondere mehrwertige Alkohole oder Mischungen davon, wovon wiederum vierwertige Alkohole, wie beispielsweise Pentaerythrit vorzugsweise einsetzbar sind. Als weitere Substanz ist Dipentaerythrit zu nennen. Wasserlösliche Substanzen mit veresterbaren Hydroxylgruppen, wie beispielsweise Kohlenhydrate, Stärke, Zucker und Cellulose, können nach der Erfindung ebenfalls verwendet werden, wenn die daraus resultierende Wasserlöslichkeit des Flammschutzmittels auf die Flachpreßplatte keine nachteiligen Auswirkungen besitzt. Von den letztgenannten Substanzen sind die Kohlenhydrate bevorzugt.

Als Substanzen, die nach c) bei erhöhter Temperatur ein nichtbrennbares Gas freizusetzen vermögen, sind nach der Erfindung solche bevorzugt, die Wasser, Kohlendioxid, Stickstoff oder vorzugsweise Ammoniak freisetzen. In diesen Fällen kann es sich bei der Substanz nach c) um Hydroxide, Carbonate, Hydrogencarbonate bzw. um Ammoniumverbindungen handeln. Zur Freisetzung von Ammoniak sind insbesondere Substanzen geeignet, die freie Aminogruppen aufweisen. Solche Substanzen sind beispielsweise Melamin und Dicyandiamid. Dabei kann das Melamin in handelsüblicher reiner Form verwendet werden. Substanzen, die bei erhöhter Temperatur Kohlendioxid entwickeln und vorzugsweise eine geringe Wasserlöslichkeit besitzen, sind nach der Erfindung ebenfalls vorteilhaft einsetzbar. Bei einer solchen Substanz kann es sich beispielsweise um Kalk handeln.

Vorzugsweise ist das Flammschutzmittel selbst frei von Bindemitteln. Auch ohne weitere Zusätze bildet das Flammschutzmittel den beschriebenen Schaum. Auf diese Weise werden Kosten gespart sowie die Herstellung und Anwendung des Flammschutzmittels vereinfacht.

Nach der Erfindung ist es vorteilhaft, wenn das Flammschutzmittel zusätzlich Anticaking- und/oder Free Flow-Zusätze enthält. Dadurch wird verhindert, daß das Flammschutzmittel zusammenklumpt und seine Riesel- bzw. Fließfähigkeit bleibt erhalten. Auf diese Weise kann das Flammschutzmittel beispielsweise bei der Herstellung von schwerentflammbaren Flachpreßplatten unter homogener Verteilung eingesetzt werden. Darüber hinaus wird die Lagerfähigkeit und Transportbeständigkeit des Flammschutzmittels verbessert. Solche Zusätze können besonders dann von Vorteil sein, wenn ein Flammschutzmittel von großer Feinheit vorliegt. Vorzugsweise sind die Zusätze, bezogen auf das Flammschutzmittel, in Mengen von 0,1 bis 10 Gew.%, insbesondere 0,5 bis 2 Gew.%, enthalten. Bei den Zusätzen kann es sich um Metallseifen oder amorphe Kieselsäuren oder Mischungen solcher Substanzen handeln.

In Weiterbildung entfaltet das Flammschutzmittel eine flammhemmende Wirkung bei einer Temperatur von größer als 200 °C, insbesondere größer als 220 °C, insbesondere größer als 250 °C. Dadurch wird erreicht, daS die flammhemmende Wirkung erst oberhalb einer genügend hohen Temperatur auftritt. Dies ist insbesondere dann von Vorteil, wenn das Flammschutzmittel bei der Herstellung einer schwerentflammbaren Flachpreßplatte verarbeitet wird und bei dieser Herstellung höhere Temperaturen angewendet werden. Dies ist insbesondere bei der Herstellung von Holzspanplatten der Fall. Hier werden die Platten bei erhöhter Temperatur verpreßt, wobei die erhöhte Temperatur zum Aushärten der als Bindemittel verwendeten Duroplaste nötig ist.

Das Flammschutzmittel besitzt vorzugsweise eine geringe Wasserlöslichkeit und ist insbesondere wasserbeständig. Dies ist vorteilhaft, weil Flachpreßplatten eine hohe Stabilität gegen Luftfeuchtigkeit besitzen müssen. Wäre in diesem Fall das Flammschutzmittel wasserlöslich, würde es im Laufe der Zeit aus der Platte herausgelöst und könnte seine flammhemmende Wirkung im Brandfall nicht mehr in ausreichendem Maße entfalten.

In Weiterbildung ist es bevorzugt, wenn das Flammschutzmittel im wesentlichen pH-neutral ist und insbesondere bei Erwärmung auf die Herstelltemperatur der Flachpreßplatte keine sauren oder alkalischen Substanzen abgibt. Dies ist zweckmäßig, wenn der Aushärtungsvorgang des Bindemittels bei der Herstellung einer Flachpreßplatte durch saure oder alkalische Substanzen behindert würde. Dies ist beispielsweise der Fall bei Polyisocyanat-Bindemitteln, die für die Herstellung von formaldehydfreien Platten verwendet werden. Deshalb kann in solchen Fällen das Flammschutzmittel pH-neutral sein und auch bei erhöhten Temperaturen, insbesondere unterhalb der Preßtemperatur der Platte, keine sauren oder alkalischen Substanzen, wie beispielsweise Gase, abgeben. Dadurch wird erreicht, daß die übrigen Anforderungen an die Flachpreßplatte, wie beispielsweise bzgl. der mechanischen Daten, ohne Schwierigkeiten eingehalten werden können.

Schließlich betrifft die Erfindung ein Verfahren zur Herstellung einer schwerentflammbaren Flachpreßplatte aus an sich brennbarem Plattenmaterial, Bindemittel , Flammschutzmittel und ggf. Hilfsstoffen. Dabei werden nach der Erfindung das Plattenmaterial, Bindemittel, ggf. die Hilfsstoffe und als Flammschutzmittel eine Kombination aus a) einer Substanz, die bei erhöhter Temperatur eine Säure, insbesondere eine anorganische Säure, freizusetzen vermag, b) einer kohlenstoffhaltigen Substanz mit veresterbaren Hydroxylgruppen und c) einer Substanz, die bei erhöhter Temperatur ein nichtbrennbares Gas freizusetzen vermag, miteinander verpreßt. Die Verpressung wird vorzugsweise bei erhöhter Temperatur, insbesondere bei Temperaturen oberhalb 200 °C, insbesondere oberhalb 220 °C, durchgeführt. Durch die Verwendung der Kombination aus drei Komponenten als Flammschutzmittel läßt sich das Verfahren besonders einfach und kostengünstig durchführen.

In Weiterbildung werden das Flammschutzmittel und das Plattenmaterial vor dem Verpressen miteinander in einem Mischaggregat gemischt und auf diese Mischung wird dann das Bindemittel in Suspension/Dispersion mit Wasser aufgebracht, insbesondere aufgesprüht. Als Plattenmaterial können insbesondere Holzspäne verwendet werden. Dann werden insbesondere eine trockene Mischung des Flammschutzmittels und die Holzspäne vermischt und dann das Bindemittel, vorzugsweise ein Isocyanat-Bindemittel, in Wasser auf diese Mischung aufgebracht.

Eine weitere bevorzugte Ausführungsform des erfindungsgemäßen Verfahrens liegt vor, wenn das Flammschutzmittel in Wasser suspendiert und die erhaltene Suspension auf das Basismaterial, insbesondere die Holzspäne, aufgebracht, insbesondere aufgesprüht wird. Dabei ist es zweckmäßig, das Bindemittel, insbesondere das Isocyanat-Bindemittel, zusammen mit dem Flammschutzmittel im Wasser zu suspendieren.

Das Verfahren kann vorteilhaft auch so durchgeführt werden, daß das Bindemittel in Suspension/Dispersion mit Wasser auf das Plattenmaterial aufgebracht, insbesondere aufgesprüht wird und vor dem Verpressen das Flammschutzmittel zugemischt wird.

Bei dem Verfahren ist die Verwendung des Flammschutzmittels in feiner Verteilung, beispielsweise als Pulver, bevorzugt, wobei insbesondere die Pulverpartikel eine Größe von kleiner als 80 »m, vorzugsweise kleiner als 40 »m, aufweisen. Nach dem erfindungsgemäßen Verfahren wird das Flammschutzmittel in Pulverform vorteilhaft als trockene Mischung eingesetzt.

Schließlich betrifft die Erfindung die Verwendung eines Flammschutzmittels in Form einer Kombination der oben beschriebenen Komponenten a) bis c) zur Schwerentflammbarmachung von Flachpreßplatten bei deren Herstellung. Dabei wird das Flammschutzmittel dazu verwendet, um Flachpreßplatten bei ihrer Herstellung schwerentflammbar zu machen. Auf diese Weise wird ein wirksamer Brandschutz erreicht, ohne daß ein zusätzlicher Arbeitsgang bei der Herstellung notwendig wäre und ohne daß die Plattenoberfläche, beispielsweise durch eine Beschichtung, verändert wird.

Weitere Merkmale der Erfindung ergeben sich aus der nachfolgenden Beschreibung von bevorzugten Ausführungsformen in Verbindung mit den Unteransprüchen. Hierbei können die einzelnen Merkmale jeweils für sich allein oder zu mehreren in Kombination miteinander verwirklicht sein.

### Beispiel 1

Zur Herstellung einer dreischichtigen Flachpreßplatte werden in einem schnellaufenden Mischaggregat 65 Gew.% Holzspäne für die Deckschicht mit ca. 35 Gew.% einer Flammschutzmittelmischung intensiv vermischt. In einem zweiten analogen Mischaggregat werden 75 Gew.% Holzspäne für die Mittelschicht mit 25 Gew.% einer identischen Flammschutzmittelmischung intensiv vermischt. Die Flammschutzmittelmischung besteht aus 7,5 Gew.% Monoammoniumphosphat, 21 Gew.% Ammoniumpolyphosphat, 2,5 Gew.% Melaminphosphat, 25 Gew.% Pentaerythrit, 12 Gew.% Guanidin, 31 Gew.% Melamin und 1 Gew.% Calciumstearat. Die mit Flammschutzmittel vermischten Späne werden dann getrennt jeweils mit 15 Gew.% (bezogen auf das Gesamtgewicht der Platte) einer Emulsion aus 50 Gew.% Wasser, 40 Gew.% Diphenylmethandiisocyanat und 10 Gew.% einer 50 gew.%igen Paraffinemulsion besprüht.

Dann werden in einer konventionellen Spanplattenpresse zunächst die vorbereiteten Deckschichtspäne, dann die Mittelschichtspäne und schließlich noch einmal Deckschichtspäne gestreut, und zwar so, daß die Deckschicht ca. 15 % der Dicke der gesamten Platte besitzt. Dann wird bei 200 °C 15 Sekunden pro mm Plattendicke gepreßt. Man erhält hierbei eine Drei-Schicht-Spanplatte mit Dichte 750 kg/m³ , die die Anforderungen der DIN 4102 an schwerentflammbare Baustoffe erfüllt.

### Beispiel 2

Zur Herstellung einer dreischichtigen Flachpreßplatte werden in einem schnellaufenden Mischaggregat 68 Gew.% Deckschichtspäne mit 32 Gew.% einer Flammschutzmittelmischung, bestehend aus 28 Gew.% Ammoniumpolyphosphat, 12 Gew.% Melaminphosphat, 20 Gew.% Pentaerythrit und 40 Gew.% Melamin vermischt. Hierauf werden unter fortgesetztem Mischen 12 Gew.% einer Emulsion, bestehend aus einem 1:1 mit Wasser verdünnten Phenolresorcinharz gesprüht. In einem zweiten Mischaggregat gleichen Typs werden gleichzeitig 88 Gew.% Mittelschichtspäne mit 12 Gew.% einer Emulsion, bestehend aus einem ebenfalls 1:1 mit Wasser verdünnten Phenolresorcinharz besprüht.

Dann werden in einer konventionellen Spanplattenpresse zunächst die vorbereiteten Deckschichtspäne, dann die Mittelschichtspäne und schließlich noch einmal Deckschichtspäne gestreut, und zwar so, daß die Deckschicht ca. 20 % der Dicke der gesamten Platte besitzt. Dann wird bei 200 °C 15 Sekunden pro mm Plattendicke gepreßt. Man erhält hierbei eine Drei-Schicht-Spanplatte mit Dichte 750 kg/m³, die die Anforderungen der DIN 4102 an schwerentflammbare Baustoffe und die der DIN 68763 an V100-Platten erfüllt.

### Beispiel 3

Zur Herstellung einer einschichtigen Flachpreßplatte werden in einem schnellaufenden Mischaggregat 80 Gew.% Holzfasern mit 20 Gew.% einer Bindemittelmischung aus 45 Gew.% Wasser und 55 Gew.% Diphenylmethandiisocyanat besprüht. Hierzu gibt man unter weiterhin intensivem Mischen 25 Gew.% (bezogen auf Gesamtplatte) einer Flammschutzmittelmischung, bestehend aus 21 Gew.% Ammoniumpolyphosphat, 5 Gew.% Monoammoniumphosphat, 5 Gew.% Melaminphosphat, 28 Gew.% Dipentaerythrit, 5 Gew.% Aluminiumhydroxid, 35 Gew.% Melamin und 1 Gew.% Calciumstearat. Diese Mischung wird in einer konventionellen Spanplattenpresse bei 210 °C und einer Preßdauer von 15 Sekunden pro mm Plattendicke gepreßt. Man erhält hierbei eine Ein-Schicht-Spanplatte mit Dichte 1000 kg/m³, die die Anforderungen an schwerentflammbare Baustoffe der DIN 4102 erfüllt.

## Patentansprüche

1. Schwerentflammbare Flachpreßplatte aus an sich brennbarem Plattenmaterial, Bindemittel, Flammschutzmittel und ggf. Hilfsstoffen, dadurch gekennzeichnet, daß als Flammschutzmittel eine Kombination aus
a) einer Substanz, die bei erhöhter Temperatur eine Säure, insbesondere eine anorganische Säure, freizusetzen vermag,
b) einer kohlenstoffhaltigen Substanz mit veresterbaren Hydroxylgruppen und
c) einer Substanz, die bei erhöhter Temperatur ein nichtbrennbares Gas freizusetzen vermag,
enthalten ist, wobie die Ansprechtemperaturen bei a) und c) oberhalb der zur Herstellung der Flachpreßplatte nötigen Temperatur liegen, daß das Flammschutzmittel in feiner Verteilung in das Plattenmaterial eingemischt ist und daß das Flammschutzmittel eine geringe Wasserlöslichkeit besitzt, mit der Maßgabe daß das Flammschutzmittel
i) in einer Menge von 1-50 Gew.-% - bezogen auf das Gewicht der Platte - enthalten ist und
ii) die Komponente a) in einer Menge von 10 bis 60 Gew.-%, die Komponente b) in einer Menge von 10 bis 60 Gew.-% und die Komponente c) in einer Menge von 5 bis 55 Gew.-% enthält.

2. Flachpreßplatte nach Anspruch 1, dadurch gekennzeichnet, daß das Plattenmaterial aus holzartigen Stoffen, insbesondere aus Holzspänen, besteht.

3. Flachpreßplatte nach Anspruch 1 oder 2, dadurch gekennzeichnet, daß das Flammschutzmittel in einer Menge von 3 bis 30 Gew.-%, insbesondere 5 bis 15 Gew.-%, bezogen auf das Gewicht der Platte, enthalten ist.

4. Flachpreßplatte nach einem der vorhergehenden Ansprüche, dadurch gekennzeichnet, daß sie in an sich bekannter Weise aus mehreren Schichten, insbesondere aus mindestens zwei Deckschichten und mindestens einer Mittelschicht, besteht.

5. Flachpreßplatte nach Anspruch 4, dadurch gekennzeichnet, daß das Flammschutzmittel in den Deckschichten in höherer Konzentration als in den mittleren Schichten vorliegt.

6. Flachpreßplatte nach Anspruch 4 oder 5, dadurch gekennzeichnet, daß das Flammschutzmittel in den Deckschichten in einer Menge von 5 bis 50 Gew.-%, vorzugsweise 15 bis 35 Gew.-%, bezogen auf das Material der Deckschicht, enthalten ist.

7. Flachpreßplatte nach einem der Ansprüche 4 bis 6, dadurch gekennzeichnet, daß das Flammschutzmittel in der Mittelschicht in einer Menge von 0 bis 50 Gew.-%, insbesondere von 0 bis 20 Gew.-%, bezogen auf das Material der Mittelschicht, enthalten ist.

8. Flachpreßplatte nach einem der Ansprüche 4 bis 7, dadurch gekennzeichnet, daß das Flammschutzmittel ausschließlich in den Deckschichten enthalten ist.

9. Flachpreßplatte nach einem der vorhergehenden Ansprüche, dadurch gekennzeichnet, daß das Bindemittel ein solches zum Abbinden des Plattenmaterials, insbesondere ein duroplastisches Bindemittel ist.

10. Flachpreßplatte nach einem der vorhergehenden Ansprüche, dadurch gekennzeichnet, daß das Bindemittel ein Phenoplast, ein Phenolresorcinharz oder vorzugsweise ein Isocyanat-Bindemittel ist.

11. Flachpreßplatte nach einem der vorhergehenden Ansprüche, dadurch gekennzeichnet, daß das Bindemittel dem Plattenmaterial in einer Menge von 2 bis 15 Gew.-%, insbesondere 3 bis 10 Gew.-%, bezogen auf das Gewicht der Platte, zugesetzt ist.

12. Flachpreßplatte nach einem der vorhergehenden Ansprüche, dadurch gekennzeichnet, daß sie bei einer Temperatur von größer als 200 °C, insbesondere größer als 220 °C, eine flammhemmende Wirkung entfaltet.

13. Verfahren zur Herstellung einer schwerentflammbaren Flachpreßplatte aus an sich brennbarem Plattenmaterial, Bindemittel, Flammschutzmittel und ggf. Hilfsstoffen, dadurch gekennzeichnet, daß Plattenmaterial, Bindemittel, ggf. Hilfsstoffe und als Flammschutzmittel eine Kombination aus
a) einer Substanz, die bei erhöhter Temperatur eine Säure, insbesondere eine anorganische Säure, freizusetzen vermag,
b) einer kohlenstoffhaltigen Substanz mit veresterbaren Hydroxylgruppen und
c) einer Substanz, die bei erhöhter Temperatur ein nichtbrennbares Gas freizusetzen vermag,
und ggf. Anticaking und/oder Freeflow-Zusätze miteinander verpreßt werden, wobei die Ansprechtemperaturen bei a) und c) oberhalb der zur Herstellung der Flachpreßplatte nötigen Temperatur liegen, das Flammschutzmittel in feiner Verteilung in das Plattenmaterial eingemischt ist und das Flammschutzmittel eine geringe Wasserlöslichkeit besitzt, mit der Maßgabe, daß das Flammschutzmittel
i) in einer Menge von 1 bis 50 Gew.-% - bezogen auf das Gewicht der Platte - enthalten ist und
ii) die Komponente a) in einer Menge von 10 bis 60 Gew.-%, die Komponente b) in einer Menge von 10 bis 60 Gew.-% und die Komponente c) in einer Menge von 5 bis 55 Gew.-% enthält.

14. Verfahren nach Anspruch 13, dadurch gekennzeichnet, daß die Verpressung bei erhöhter Temperatur, insbesondere bei ca. 200 °C, durchgeführt wird.

15. Verfahren nach Anspruch 13 oder 14, dadurch gekennzeichnet, daß vor dem Verpressen das Flammschutzmittel und das Plattenmaterial miteinander vermischt und dann das Bindemittel in Suspension/Dispersion mit Wasser auf die erhaltene Mischung aufgebracht, insbesondere aufgesprüht wird.

16. Verfahren nach Anspruch 13 oder 14, dadurch gekennzeichnet, daß das Bindemittel in Suspension/Dispersion mit Wasser auf das Plattenmaterial aufgebracht, insbesondere aufgesprüht wird und vor dem Verpressen das Flammschutzmittel zugemischt wird.

17. Verfahren nach Anspruch 13 oder 14, dadurch gekennzeichnet, daß vor dem Verpressen das Flammschutzmittel, insbesondere zusammen mit dem Bindemittel, in Wasser suspendiert/dispergiert und die erhaltene Suspension/Dispersion auf das Basismaterial aufgebracht, insbesondere aufgesprüht wird.

18. Verwendung eines Flammschutzmittels in Form einer Kombination aus
a) einer Substanz, die bei erhöhter Temperatur eine Säure, insbesondere eine anorganische Säure, freizusetzen vermag,
b) einer kohlenstoffhaltigen Substanz mit veresterbaren Hydroxylgruppen und
c) einer Substanz, die bei erhöhter Temperatur ein nichtbrennbares Gas freizusetzen vermag,
mit der Maßgabe, daß das Flammschutzmittel die Komponente a) in einer Menge von 10 bis 60 Gew.-%, die Komponente b) in einer Menge von 10 bis 60 Gew.-% und die Komponente c) in einer Menge von 5 bis 55 Gew.-% enthält, zur Schwerentflammbarmachung von Flachpreßplatten bei deren Herstellung.

## Claims

1. A flame-resistant flat pressed board of basically flammable board material, binder, flameproofing agent and optionally auxiliaries, characterized in that the flameproofing agent is a combination of
a) a substance capable of releasing an acid, more particularly an inorganic acid, at elevated temperature,
b) a carbon-containing substance bearing esterifiable hydroxyl groups and
c) a substance capable of releasing a non-inflammable gas at elevated temperature,
the response temperatures of a) and c) being above the temperature required for the production of the flat pressed board; in that the flameproofing agent is finely dispersed throughout the board material and in that the flameproofing agent is sparingly soluble in water, with the proviso that the flameproofing agent
i) is present in a quantity of 1 to 50% by weight, based on the weight of the board, and
ii) component a) is present in a quantity of 10 to 60% by weight, component b) is present in a quantity of 10 to 60% by weight and component c) is present in a quantity of 5 to 55% by weight.

2. A flat pressed board as claimed in claim 1, characterized in that the board material consists of wood-like materials, particularly wood chips.

3. A flat pressed board as claimed in claim 1 or 2, characterized in that the flameproofing agent is present in a quantity of 3 to 30% by weight and, more particularly, in a quantity of 5 to 15% by weight, based on the weight of the board.

4. A flat pressed board as claimed in any of the preceding claims, characterized in that it consists in known manner of several layers, more particularly of at least two outer layers and at least one middle layer.

5. A flat pressed board as claimed in claim 4, characterized in that the flameproofing agent is present in a higher concentration in the outer layers than in the middle layers.

6. A flat pressed board as claimed in claim 4 or 5, characterized in that the flameproofing agent is present in the outer layers in a quantity of 5 to 50% by weight and preferably in a quantity of 15 to 35% by weight, based on the material of the outer layer.

7. A flat pressed board as claimed in any of claims 4 to 6, characterized in that the flameproofing agent is present in the middle layer in a quantity of 0 to 50% by weight and more particularly in a quantity of 0 to 20% by weight, based on the material of the middle layer.

8. A flat pressed board as claimed in any of claims 4 to 7, characterized in that the flameproofing agent is present solely in the outer layers.

9. A flat pressed board as claimed in any of the preceding claims, characterized in that the binder is a binder suitable for binding the board material, more particularly a thermoset binder.

10. A flat pressed board as claimed in any of the preceding claims, characterized in that the binder is a phenolic, a phenol/resorcinol resin or preferably an isocyanate binder.

11. A flat pressed board as claimed in of any the preceding claims, characterized in that the binder is added to the board material in a quantity of 2 to 15% by weight and more particularly in a quantity of 3 to 10% by weight, based on the weight of the board.

12. A flat pressed board as claimed in any of the preceding claims, characterized in that it develops a flameproofing effect at a temperature above 200°C and, more particularly, at a temperature above 220°C.

13. A process for the production of a flame-resistant flat pressed board of basically flammable board material, binder, flameproofing agent and, optionally, auxiliaries, characterized in that the board material, binder, the auxiliaries, if any, and - as flameproofing agent - a combination of
a) a substance which is capable of releasing an acid, particularly an inorganic acid, at elevated temperature,
b) a carbon-containing substance bearing esterifiable hydroxyl groups and
c) a substance which is capable of releasing a non-inflammable gas at elevated temperature
and optionally anticaking and/or free-flow additives are pressed together, the response temperatures of a) and c) being above the temperature required for the production of the flat pressed board, the flameproofing agent being finely dispersed throughout the board material and the flameproofing agent being sparingly soluble in water, with the proviso that the flameproofing agent
i) is present in a quantity of 1 to 50% by weight, based on the weight of the board, and
ii) component a) is present in a quantity of 10 to 60% by weight, component b) is present in a quantity of 10 to 60% by weight and component c) is present in a quantity of 5 to 55% by weight.

14. A process as claimed in claim 13, characterized in that pressing is carried out at elevated temperature, more particularly at around 200°C.

15. A process as claimed in claim 13 or 14, characterized in that the flameproofing agent and the board material are mixed together before pressing and the binder suspended/dispersed in water is subsequently applied to the mixture obtained, more particularly by spraying.

16. A process as claimed in claim 13 or 14, characterized in that the binder suspended/dispersed in water is applied to the board material, more particularly by spraying, and the flameproofing agent is added before pressing.

17. A process as claimed in claim 13 or 14, characterized in that the flameproofing agent is suspended/dispersed in water, more particularly together with the binder, before pressing and the suspension/dispersion obtained is applied to the base material, more particularly by spraying.

18. The use of a flameproofing agent in the form of a combination of
a) a substance which is capable of releasing an acid, particularly an inorganic acid, at elevated temperature,
b) a carbon-containing substance bearing esterifiable hydroxyl groups and
c) a substance which is capable of releasing a noninflammable gas at elevated temperature,
with the proviso that the flameproofing agent contains component a) in a quantity of 10 to 60% by weight, component b) in a quantity of 10 to 60% by weight and component c) in a quantity of 5 to 55% by weight, for flameproofing flat pressed boards during their production.

## Revendications

1. Panneaux pressés à plat difficilement inflammables en matériau de panneau combustible en soi, en agent liant, en agent d'ignifugation et le cas échéant en substances auxiliaires, caractérisé en ce que comme agent ignifugeant, une combinaison à base de:
a) une substance qui est capable de libérer à température élevée un acide, en particulier un acide minéral,
b) une substance carbonée ayant des groupes hydroxyle estérifiables et,
c) une substance qui est capable de dégager à température élevée, un gaz non combustible,
y est contenue, dans laquelle les températures de réponse pour a) et c) se situent au-dessus de la température nécessaire pour la production des panneaux pressés à plat, en ce que l'agent d'ignifugation est introduit par mélange sous forme de distribution fine dans le matériau de panneau et en ce que l'agent d'ignifugation possède une faible solubilité dans l'eau, avec la restriction que l'agent d'ignifugation
i) est contenu en quantité allant de 1 à 50 % en poids, rapportée au poids des panneaux et,
ii) contient le composant a) en quantité allant de 10 à 60 % en poids, le composant b) en quantité allant de 10 à 60 % en poids et le composant c) en quantité allant de 5 à 55 % en poids.

2. Panneaux pressés à plat selon la revendication 1, caractérisés, en ce que le matériau de panneau est formé de substances ligneuses, en particulier de copeaux de bois.

3. Panneaux pressés à plat selon la revendication 1 ou la revendication 2, caractérisés en ce que l'agent d'ignifugation y est contenu en une quantité allant de 3 à 30 % en poids, en particulier de 5 à 15 % en poids rapportée au poids des panneaux.

4. Panneaux pressés à plat selon l'une des revendications précédentes, caractérisés en ce qu'ils consistent d'une manière connue en soi en plusieurs couches, en particulier en au moins deux couches de couverture et en au moins une couche médiane.

5. Panneaux pressés à plat selon la revendication 4, caractérisés en ce que l'agent d'ignifugation est présent dans les couches de couverture à une concentration plus élevée que dans la couche médiane.

6. Panneaux pressés à plat selon la revendication 4 ou la revendication 5, caractérisés en ce que l'agent d'ignifugation dans les couches de couverture y est contenu en quantité allant de 5 a 50 % en poids, de préférence de 15 à 35 % en poids, rapportée au matériau de la couche de couverture.

7. Panneaux pressés à plat selon l'une des revendications 4 à 6, caractérisés en ce que l'agent d'ignifugation dans la couche médiane y est contenu en quantité allant de 0 à 50 % en poids, en particulier de 0 à 20 % en poids, rapportée au matériau de la couche médiane.

8. Panneaux pressés à plat selon l'une des revendications 4 à 7, caractérisés en ce que l'agent d'ignifugation est contenu exclusivement dans les couches de couverture.

9. Panneaux pressés à plat selon l'une des revendications précédentes, caractérisés en ce que l'agent liant est un de ceux pour le durcissement du matériau de panneau, en particulier un agent liant duroplastique.

10. Panneaux pressés à plat selon l'une des revendications précédentes, caractérisés en ce que l'agent liant est un phénoplaste, une résine phénolrésorcinol ou de préférence un agent liant du type isocyanate.

11. Panneaux pressés à plat selon l'une des revendications précédentes, caractérisés en ce que l'agent liant est ajouté au matériau de panneau en une quantité allant de 2 à 15 % en poids, en particulier de 3 à 10 % en poids, rapportée au poids des panneaux.

12. Panneaux pressés à plat selon l'une des revendications précédentes, caractérisés en ce qu'ils déploient une action ignifuge à une température de plus de 200°C, en particulier supérieure à 220°C.

13. Procédé de production d'un panneau pressé à plat difficilement inflammable en matériau de panneau, combustible en soi, en agent liant, en agent d'ignifugation et le cas échéant en produits auxiliaires, caractérisé en ce que le matériau de panneau, l'agent liant, le cas échéant les produits auxiliaires et en tant qu'agent d'ignifugation une combinaison à base d':
a) une substance qui est capable de libérer à température élevée, un acide en particulier un acide minéral,
b) une substance carbonée ayant des groupes hydroxyde estérifiables, et
c) une substance qui est capable de dégager à température élevée un gaz non combustible et le cas échéant des additifs anti-agglomération et/ou de libre écoulement, sont comprimés les uns avec les autres,
procédé dans lequel les températures de réponse pour a) et pour c) se situent au-dessus des températures nécessaires pour la production des panneaux pressés à plat, dans lequel l'agent d'ignifugation est introduit par mélange en fine distribution dans le matériau de panneau, et dans lequel l'agent d'ignifugatlon possède une faible solubilité dans l'eau, avec la réserve que l'agent d'ignifugation
i) y est contenu en une quantité allant de 1 à 50 % en poids, rapporté au poids du panneau et,
ii) contient le composant a) en quantité allant de 10 à 60 % en poids, le composant b) en une quantité de 10 à 60 % en poids et le composant c) en une quantité de 5 à 55 % en poids.

14. Procédé selon la revendication 13, caractérisé en ce que l'on effectue la compression à température élevée, en particulier à environ 200°C.

15. Procédé selon la revendication 13 ou la revendication 14, caractérisé en ce qu'avant la compression, on mélange l'agent d'ignifugation et le matériau de panneau l'un avec l'autre, et qu'ensuite on applique l'agent liant en suspension/dispersion avec de l'eau sur le mélange obtenu, en particulier on le pulvérise.

16. Procédé selon la revendication 13 ou la revendication 14, caractérisé en ce que l'agent liant est appliqué, et en particulier est pulvérisé, en suspension/dispersion avec de l'eau sur le matériau de panneau, et en ce que l'agent d'ignifugation est mélangé avant la compression.

17. Procédé selon la revendication 13 ou la revendication 14, caractérisé en ce que l'on met en suspension/dispersion dans l'eau l'agent d'ignifugation avant la compression, en particulier conjointement avec l'agent liant et en ce que l'on applique, en particulier on pulvérise la suspension/dispersion obtenue, sur le matériau de base.

18. Utilisation d'un agent d'ignifugation sous forme d'une combinaison à base de :
a) une substance qui est capable à température élevée, de libérer un acide, en particulier un acide minéral,
b) une substance carbonée ayant des groupes hydroxyle estérifiables, et
c) une substance qui est capable à température élevée, de dégager un gaz non combustible,
avec la restriction que l'agent d'ignifugation contient le composant a) en une quantité allant de 10 à 60 % en poids, le composant b) en une quantité allant de 10 à 60 % en poids et le composant c) en une quantité allant de 5 à 55 % en poids, en vue de rendre difficilement inflammable les panneaux pressés à plat au cours de leur production.
